# EUROPÄISCHE PATENTANMELDUNG

(11) **EP 2 357 426 A1**
(43) Veröffentlichungstag der Anmeldung: **17.08.2011**
(21) Anmeldenummer: 10001495.0
(22) Anmeldetag: 13.02.2010
(51) Int. Cl.: F24J 2/52

(54) **Fundament für Tragstrukturen, Tragstruktur, Solaranlage mit einer Tragstruktur und Verwendung eines Fundaments**

(71) Anmelder: SES Schärer Consulting, 8008 Zürich (CH)
(72) Erfinder: Schärer, Salomon E., 8044 Zürich (CH)
(74) Vertreter: EGLI-EUROPEAN PATENT ATTORNEYS

(57) **Zusammenfassung**

Die Erfindung betrifft ein Fundament (10) für Tragstrukturen (40) von Anlagen oder Ähnlichem, umfassend eine Bodenplatte (12) aus einem recyclierten Kunststoffmaterial, mit einem wellenförmig gestalteten Querschnittsprofil, das abwechselnde Hochsicken (14) und Tiefsicken (16) aufweist.

## Beschreibung

Die vorliegende Erfindung betrifft ein Fundament für Tragstrukturen, eine Tragstruktur, eine Solaranlage mit einer Tragstruktur und eine Verwendung eines Fundaments.

In zunehmendem Masse werden Solaranlagen zur Gewinnung regenerativer Energie und Einspeisung dieser in ein lokales oder übergreifendes Leitungsnetz installiert. Die Solaranlagen enthalten wenigstens ein Solarpanel, welches durch eine Tragstruktur gehalten und ausgerichtet wird. Die Installation kann stationär oder variabel - der Sonne folgend - sein. Bei der zuletzt genannten Variante sind maximale Absorptionsgrade der Sonneneinstrahlung erzielbar - allerdings verbunden mit hohen Kosten, weil die Nachführmechanik sehr aufwendig und teuer ist.

Auch bei stationärer Installation kann eine über das Jahr betrachtet hohe Sonneneinstrahlung absorbiert und in elektrische Energie umgewandelt wird. Bevorzugt sind die Solarpanels zur Südseite, der Sonne entgegen, bei einem Neigungswinkel zwischen 20° und 60° (u.a. in Abhängigkeit des Breitengrades) angeordnet. Der Azimutwinkel gibt die Abweichung der Solarpanels von der exakten Südausrichtung an. Neben dem Azimutwinkel spielt der Neigungswinkel sowie der Stand der Sonne im jahreszeitlichen Verlauf für den Energieertrag der Solaranlage eine Rolle. Der Neigungswinkel gibt an, um wieviel Grad die Solarpanels abweichend von der Horizontalen installiert sind.

Unter anderem aufgrund von länderübergreifend vorangetriebenen Subventionierungen von Solaranlagen selber und der eingespeisten Energie ins Leitungsnetzwerk steigt die Neuinstallation von Solaranlagen rasch an. Aus diesem Grund und auch aus Platzgründen werden Solaranlagen zunehmend auf Dächern von (privaten/öffentlichen) Gebäuden installiert. Bei Gebäuden mit einem im Wesentlichen der Südseite zugewandten Schrägdach werden die Solaranlagen einfach im Wesentlichen der Schräge folgend auf dem Dach montiert. Hierbei sind die Schräge und Ausrichtung des Daches in den seltensten Fällen derart, dass die Sonnenstrahlung mit einem maximalen Wirkungsgrad absorbiert wird.

Aus diesem Grund und auch aus Gründen einer maximalen Flächennutzung werden Solaranlagen auch zunehmend auf Flachdächern installiert. Hierbei werden die Solarpanels in einem Solarpanelrahmen gehalten, welcher durch eine verstellbare Tragstruktur gehalten ist, welche wiederum über Tragschienen fest mit dem Flachdach gekoppelt ist. Dem Mehraufwand dieser Montage, verglichen mit der Montage auf einem Schrägdach, steht der Vorteil einer effizienteren Ausrichtung der Solarpanels zur maximalen Absorption der Sonnenstrahlung gegenüber, da der Azimutwinkel und der Neigungswinkel der Solarpanels nunmehr frei einstellbar und fixierbar sind. Alternativ können die Solarpanels auch mechanisch der Sonne nachgeführt werden. Zudem bieten viele Flachdächer, insbesondere von Industriegebäuden, ungenutzte Flächen, welche nunmehr ökologisch und ökonomisch sinnvoll genutzt werden können.

Hierbei sind aus statischen Gesichtspunkten und im Hinblick auf auftretende Windkräfte unterschiedliche Bedingungen zu berücksichtigen. Damit Wettereinflüsse, insbesondere durch Wind, nicht zu Beschädigungen der Solaranlage selber - oder durch die Solaranlage hervorgerufen - führen, muss diese besonders fest mit dem Flachdach gekoppelt werden. Durch die geneigte Anordnung der Solarpanels wird dem Wind eine immer noch grosse Angriffsfläche geboten. Zudem herrschen auf Flachdächern von beispielsweise Hochhäusern sehr grosse Windgeschwindigkeiten, welche insbesondere bei Böen enorme Kräfte auf Flächen anlegen. Eine unzureichende Kopplung der Solaranlage mit dem Flachdach kann schnell zum Loslösen aus der Verankerung führen, welches verheerende Folgen hat. Zum einen werden fast unweigerlich die recht teuren Solarpanel der Solaranlage selber zerstört. Zum anderen kann eine herumfliegende Solaranlage mit massiver Tragstruktur auch schwere Beschädigungen, beispielsweise bei benachbarten Solaranlagen, hervorrufen. Noch dramatischer wäre ein Herunterfallen einer aus der Verankerung losgelösten Solaranlage vom Flachdach, da hierbei Gesundheit und Leben von Passanten gefährdet werden können.

Eine Kopplung der Solaranlage durch Verankerung dieser mittels tiefer und schwerer Betonfundamente, wie zum Beispiel auf Freiflächen (Nutzfläche, Bauland, Garten, usw.) üblich, ist auf einem Flachdach ausgeschlossen. Eine Kopplung der Solaranlage mittels einer Verankerung mit dem Flachdach durch beispielsweise Bolzen oder Spezialschrauben ist nachteilig, da Gebäudedecken aus statischen Gründen üblicherweise leichtgewichtig ausgebildet sind, wobei die Gewichtseinsparung üblicherweise durch Materialeinsparung des Deckenmaterials (eine beispielsweise dünne aber stabile Betonplatte) erzielt wird. Somit könnten Schrauben zum Verankern der Solaranlage mit dem Flachdach nur unzureichend Halt finden. Zudem würde eine Verankerung mittels Schrauben zur Beschädigung des Materials des Flachdachs und insbesondere zur Beeinträchtigung der Dämmung und Abdichtung des Flachdachs führen. Solche herbeigerufenen Beschädigungen und Beeinträchtigungen sind nur mit grossem Arbeitsaufwand zu lokalisieren und zu beheben.

Es ist bekannt, Tragstrukturen von Solaranlagen zur Kopplung mit der Installationsfläche durch schwere Betonelemente zu beschweren.

Die WO 2004/048862 offenbart eine Kopplung von einer Tragstruktur einer Solaranlage auf einer sensiblen Fläche, bei welcher ein Eingriff in den Untergrund problematisch ist. Die Kopplung besteht aus einem Behältnis, wobei die Tragstruktur am Behältnis befestigt ist und das Behältnis mit Gewichten befüllbar ist.

Ein Nachteil einer derartigen Kopplung mit einem Flachdach besteht darin, dass diese Gewichte umständlich und mit viel Zeitaufwand auf das Flachdach befördert werden müssen. Insbesondere bei verwinkelten Gebäudekomplexen ist ein solcher Transport nur mit unverhältnismässig hohem Zeit- und Energieaufwand möglich. Unter ökonomischen Gesichtspunkten kann es fraglich sein, ob dieser Energieaufwand in vernünftiger Relation zur gewonnenen regenerativen Energie steht. Ein weiterer Nachteil besteht darin, dass einige Flachdachkonstruktionen gar nicht dazu ausgelegt sind, solche notwendigen Gewichte zu tragen. Um einen Einsturz der Dachkonstruktion zu vermeiden, ist es daher oftmals notwendig, diese Dachkonstruktionen zu verstärken, indem beispielsweise nachträglich Stahlträger eingezogen werden. Ferner, unter der Annahme, dass jener Abschnitt des Flachdachs, auf welchem die durch das Gewicht gekoppelte Tragstruktur installiert wird, eine ausreichende Tragkraft zum Abstützen dieser Installation aufweist, müssen auch jene Abschnitte des Flachdachs, über welche das Gewicht lediglich transportiert werden muss, ebenfalls eine ausreichende Tragkraft aufweisen, was nicht in allen Fällen von Flachdachkonstruktionen gegeben ist.

Es ist eine Aufgabe der vorliegenden Erfindung, ein Fundament für Tragstrukturen, eine Tragstruktur, eine Solaranlage mit einer Tragstruktur und eine Verwendung eines Fundaments bereitzustellen, welche die Nachteile des Standes der Technik beheben.

Erfindungsgemäss wird diese Aufgabe durch ein Fundament für Tragstrukturen von Anlagen oder Ähnlichem gelöst, welches eine Bodenplatte aus einem Kunststoffmaterial, mit einem wellenförmig gestalteten Querschnittsprofil, das abwechselnde Hochsicken und Tiefsicken aufweist, enthält. Ein solches Fundament ist einfach und günstig herstellbar, stellt eine feste und zuverlässige Kopplung bereit und weist aufgrund des wellenförmigen Querschnittsprofils der Bodenplatte eine hohe Formstabilität und Verwindungssteifigkeit auf.

Vorzugsweise ist das Kunststoffmaterial ein Rezyklat und umfasst insbesondere einen PE-(Polyethylen)-Kunststoff. Dieses Material hat für das Fundament hervorragende Eigenschaften, da es absolut verrottungsfest und beständig gegen UV-Bestrahlung ist, sowie chemisch und biologisch neutrale Eigenschaften hat. Ausserdem nimmt das Material kein Wasser auf und ist sehr schlag-, bruch- und reissfest. Ein weiterer Vorteil besteht darin, dass es sich wie Holz be- und verarbeiten lässt. Beispielsweise kann das Material einfach gebohrt und gesägt werden und lassen sich auch Abrisskanten einfach nachbearbeiten, beispielsweise durch Entgraten oder Feilen. Im zunehmenden Masse werden sortierte Kunststoffmaterialien zur Wiederverwendung in den Herstellungskreislauf zurückgeführt (Recycling). Diente die Wiederverwendung in den Anfangszeiten hauptsächlich zur Abfallvermeidung, so hat sich wiederverwendbares Kunststoffmaterial in den letzten Jahren zusehends auch zum Rohstoff- und Energielieferanten entwickelt. Wesentlich beigetragen haben hierzu verbesserte Recyclingverfahren und verbesserte Verfahren zur Materialtrennung. Das recyclierte Polyethylen-Kunststoffmaterial ist daher günstig erhältlich und besitzt hervorragende Formeigenschaften. Das Kunststoffmaterial der Bodenplatte kann später erneut recycliert werden oder zumindest problemlos sortiert und entsorgt werden.

Vorzugsweise beträgt das Gewicht der Bodenplatte zwischen 5 und 10 kg/m2, bevorzugt 8 kg/m2. Ein Vorteil besteht darin, dass das Flächengewicht, verglichen mit herkömmlichen Fundamenten, sehr gering ist. Insgesamt wird das Gewicht der Bodenplatte gleichmässig auf eine grosse Fläche verteilt.

Vorzugsweise ist das wellenförmige Querschnittsprofil als ein Trapezprofil ausgebildet. Ein solches Profil weist eine hohe Formstabilität auf und ist besonders einfach zu formen. Ein weiterer Vorteil besteht darin, dass die zum Trapezprofil gegossenen Bodenplatten sehr platzsparend durch Übereinanderstapeln lagerbar sind. Verglichen mit Bodenplatten gleicher Formstabilität aber anderer Querschnittsprofile, benötigen Bodenplatten mit dem Trapezprofil das geringste Materialvolumen, sodass insbesondere bei der Massenherstellung hohe Kosteneinsparungen erzielbar sind.

Vorzugsweise weist das Trapezprofil zwischen drei und acht, bevorzugt sechs Hochsicken auf. Eine solche Bodenplatte mit einem Trapezprofil einer derartigen Anzahl von Hochsicken ist gut transportierbar, lagerbar und lässt sich schnell und einfach verlegen.

Vorzugsweise ist eine Masseinteilung auf der Oberseite der Bodenplatte vorgesehen. Hierdurch können Tragstrukturen oder Elemente derer, z.B. Tragschienen, besonders schnell und einfach ausgerichtet werden. Ein weiterer Vorteil besteht darin, dass die Bodenplatten an Ort und Stelle der Installation besonders schnell zuschneidbar sind, falls notwendig.

Vorzugsweise ist die Masseinteilung auf den Hochsicken angebracht. Hierdurch ist die Masseinteilung am Verlegeort gut sichtbar, wodurch Zeit gespart wird.

Vorzugsweise weist die Masseinteilung kastenförmige Aus- oder Einprägungen vorbestimmter Länge auf. Ein wesentlicher Vorteil besteht darin, dass die zu befestigenden Tragstrukturen oder Elemente derer schnell, einfach und ohne Zuhilfenahme separater Längen- oder Winkelmasse (z.B. ein Zollstock, ein Winkel, usw.) ausgerichtet und befestigt werden können.

Vorzugsweise haben die Aus- oder Einprägungen eine Länge zwischen 5 und 15 cm, bevorzugt 10 cm. Hierdurch können die Tragstrukturen oder Elemente derer schnell und einfach innerhalb vorgesehener Längenintervalle auf der Bodenplatte ausgerichtet und befestigt werden.

Vorzugsweise enthält die Bodenplatte eine Mehrzahl von Versteifungsrippen, welche quer zur Erstreckungsrichtung der Hochsicken und Tiefsicken an der Bodenplatte verlaufen. Hierdurch wird der Bodenplatte in Querrichtung zur Erstreckungsrichtung der Sicken eine erhöhte Formstabilität verliehen, wobei der Materialeinsatz hierzu minimal ist. Die Versteifungsrippen können einstückig mit dem Material der Bodenplatte ausgebildet sein. Alternativ sind die Versteifungsrippen als separate Elemente (z.B. Streben) ausgebildet, welche mit der Bodenplatte verbunden werden.

Vorzugsweise verlaufen die Versteifungsrippen senkrecht zur Erstreckungsrichtung der Hochsicken und Tiefsicken der Bodenplatte. Bei senkrechter Ausrichtung der Versteifungsrippen wird der Bodenplatte bei nur geringem Materialeinsatz eine maximale Formstabilität und Verwindungssteifigkeit verliehen.

Vorzugsweise sind die Versteifungsrippen zur Unterteilung wenigstens der Tiefsicken in einzelne wannenförmige Kammern ausgelegt. Hierdurch dienen die Versteifungsrippen neben der Erhöhung der Formstabilität und Verwindungssteifigkeit von der Bodenplatte auch gleichzeitig zur zellenartigen Unterteilung der Tiefsicken in einzelne wannenförmige Kammern, welche mit Material befüllt werden können.

Vorzugsweise sind zumindest zwei Versteifungsrippen symmetrisch zur Mittenlinie der Bodenplatte angeordnet. Hierdurch können die Bodenplatten unabhängig von ihrer Ausrichtung hintereinander verlegt werden. Beispielsweise verlaufen jeweils zwei Versteifungsrippen in unmittelbarer Distanz, z.B. 1 bis 15% der Bodenplatten-Länge, zu einer jeweils parallel verlaufenden Kante (Breitenkante) der Bodenplatte, wobei die Distanzen aufgrund der Symmetrie identisch sind.

Vorzugsweise sind die Versteifungsrippen derart angeordnet, dass bei einer Vereinzelung der Bodenplatte in zumindest zwei Bodenplatten-Elemente identischen Abmasses an diesen jeweiligen Bodenplatten-Elementen weiterhin zumindest zwei Versteifungsrippen jeweils symmetrisch zur jeweiligen Mittenlinie der Bodenplatten-Elemente angeordnet sind. Hierdurch ist eine situativ einsetzbare Bodenplatte geschaffen, welche in mehrere Bodenplatten-Elemente vereinzelt werden kann. Hierbei haben diese Bodenplatten-Elemente zueinander identische Abmasse. Da diese Abmasse selbstverständlich jeweils kleiner sind als das Abmass der Bodenplatte, kann situativ eine zu verlegende Fläche mit einem Abmass kleiner als das Abmass von einer (ganzen) Bodenplatte, mit zumindest einem (vereinzelten) Bodenplatten-Element belegt werden. Eventuell verbleibende Bodenplatten-Elemente aus einer vereinzelten Bodenplatte können situativ an weiteren Flächen mit einem Abmass kleiner als das Abmass von einer (ganzen) Bodenplatte verlegt werden. Ein Vorteil besteht darin, dass jedes vereinzelte Bodenplatten-Elemente weiterhin zumindest zwei symmetrische Versteifungsrippen enthält.

Vorzugsweise sind an der Bodenplatte eine Mehrzahl von Elemente-Masseinteilungen zur Vereinzelung der Bodenplatte in zumindest zwei Bodenplatten-Elemente identischen Abmasses angebracht. Hierdurch wird die Vereinzelung der Bodenplatte am Verlegeort erleichtert.

Vorzugsweise enthält die Bodenplatte vier symmetrische Versteifungsrippen, welche derart angeordnet sind, dass nach einer Halbierung der Bodenplatte in zwei Bodenplatten-Elemente, die jeweiligen Abstände zwischen einer Versteifungsrippe zur jeweiligen Seitenkante identisch sind. Hierdurch ist eine multifunktionale Bodenplatte geschaffen, welche am Verlegeort in zwei gleichgrosse Bodenplatten-Elemente halbiert werden kann, welche dann jeweils situativ auf Flächen kleineren Abmasses oder auf schwer zugänglichen Flächen verlegt werden können.

Vorzugsweise enthält die Bodenplatte eine Mehrzahl von Rillen, welche an der Unterseite der Bodenplatte und quer zur Erstreckungsrichtung der Tiefsicken verlaufen. Hierdurch wird Wasser, z.B. Regenwasser, welches sich unterhalb der Bodenplatte ansammelt, schnell und zuverlässig durch das Drainageprinzip abgeführt. Hierbei wird das unterhalb der Tiefsicken stehende Wasser durch Sogkraft eines im Bereich unterhalb der jeweiligen Hochsicken fliessenden Wasserstroms abgesaugt. Ein Vorteil besteht darin, dass nunmehr kein Wasser unterhalb der Bodenplatte steht und dadurch die tragende Strukturfläche, beispielsweise die Oberfläche des Flachdachs, gegen Verrottung geschützt wird. Hierbei werden besonders Bitumenmaterial-Schweissbahnen, welche üblicherweise zur Abdichtung von Flachdächern verlegt werden, geschont. Bitumenmaterial-Schweissbahnen geraten schnell durch stehendes Wasser und besonders durch klimatisch bedingte Eisbildung auf den Bahnen oder besonders in Zwischenräumen oder Nahtstellen zwischen den Bahnen in Mitleidenschaft und werden undicht. Durch die Anbringung der Rillen an der Unterseite der Bodenplatte wird das Wasser permanent abgeführt und werden somit die Bodenplatte selber und Bitumenmaterial-Schweissbahnen geschont. Hierdurch erhöhen sich die Lebensdauer der Bodenplatte und insbesondere die Abdichteigenschaften des Flachdachs.

Vorzugsweise verlaufen die Rillen bei einem Winkel von 45° zur Erstreckungsrichtung der Tiefsicken. Durch diesen Verlauf der Rillen wird jegliches unterhalb der Tiefsicken stehende Wasser optimal durch die Sogkraft des im Bereich unterhalb der jeweiligen Hochsicken fliessenden Wasserstroms abgesaugt. Die Drainagewirkung ist bei diesem Winkel maximal.

Vorzugsweise verlaufen die Rillen zwischen benachbarten Tiefsicken in Relation zueinander um 90° versetzt. In diesem Fall verlaufen die Rillen an einer Tiefsicke, betrachtet in Längsrichtung der Tiefsicke und von links nach rechts, nach oben gerichtet, wobei die Rillen an der benachbarten Tiefsicke, bei gleicher Betrachtungsweise, nach unten gerichtet verlaufen. Diese Anordnung wechselt dann wiederholt von Tiefsicke zu Tiefsicke. Wie zuvor beschrieben, wird das unterhalb der Tiefsicken stehende Wasser durch Sogkraft eines im Bereich unterhalb der jeweiligen (benachbarten) Hochsicken fliessenden Wasserstroms abgesaugt. Dieses Drainageprinzip erzielt seine maximale Wirkung, wenn die Rillen bei einem Winkel von 45° zur Erstreckungsrichtung der Tiefsicken bzw. zur Strömungsrichtung des Wasserstroms verlaufen. Ein Vorteil der von Tiefsicke zu Tiefsicke unterschiedlichen Ausrichtung der Rillen untereinander (90°-Versatz) besteht darin, dass dieses Drainageprinzip unabhängig einer vorherrschenden Strömungsrichtung des unterhalb der Hochsicken strömenden (abfliessenden) Wassers geschieht. Durch den 90°-Versatz der Rillenanordnung wirkt das Drainageprinzip nämlich bei beiden Strömungsrichtungen. Da das Drainageprinzip bei beiden Strömungsrichtungen wirkt, können die Bodenplatten auch unabhängig von einer vorherrschenden Strömungsrichtung, beispielsweise hervorgerufen durch ein Gefälle des Flachdachs, verlegt werden. Hierdurch wird viel Zeit eingespart und werden mögliche Fehler bei der Verlegearbeit ausgeschlossen.

Vorzugsweise weist die Bodenplatte eine Breite zwischen 60 und 100 cm, bevorzugt 80 cm, und eine Länge zwischen 100 und 140 cm, bevorzugt 120 cm, auf, wobei die Breite senkrecht zur Erstreckungsrichtung und die Länge in Erstreckungsrichtung der Hochsicken und Tiefsicken definiert sind. Eine Bodenplatte mit derartigen Ausmassen ist einfach und kostengünstig herstellbar, gut lager- bzw. stapelbar, und zudem einfach und handlich transportierbar und verlegbar. Ein wichtiger Vorteil besteht zudem hinsichtlich der Gewichtsverteilung in Relation zur Fläche. Im Stand der Technik wird die Gewichtskraft von einer installierten Solaranlage, welche hauptsächlich aus der Gewichtskraft von der zumeist stabilen und somit schweren Tragstruktur zusammengesetzt ist, über die kleine Gesamtfläche von Standfüssen der installierten Solaranlage verteilt, auf die zu tragende Oberfläche übertragen. Bei dem Fundament der Erfindung wird hingegen die gesamte Gewichtskraft der Solaranlage, gleichmässig über die grosse Fläche der Bodenplatte verteilt, auf die zu tragende Oberfläche übertragen. Hierdurch können grossflächige Solaranlagen mit hohem Gewicht auch auf Flachdächern installiert werden, deren Tragstruktur eine geringe Flächentragkraft hat.

Vorzugsweise weist die Bodenplatte eine Materialstärke zwischen 5 und 10 mm, bevorzugt 8 mm, auf. Eine Bodenplatte einer solchen Materialstärke ist schnell und einfach herstellbar und weist eine hohe Formstabilität auf. Die Materialstärke kann in Abhängigkeit der Gesamtausmasse der Bodenplatte, der gewünschten Formstabilität und Verwindungssteifigkeit und weiterer Parameter variieren.

Vorzugsweise weist die Bodenplatte zwischen der Unterseite der Tiefsicke und der Oberseite der Hochsicke eine Tiefe zwischen 30 und 40 mm, bevorzugt 35 mm, auf. Durch diese Dimensionierung der Bodenplatte wird dieser bei minimalem Materialeinsatz eine hohe Formstabilität und Verwindungssteifigkeit verliehen.

Vorzugsweise besteht das Fundament aus zumindest zwei Bodenplatten, welche senkrecht zur Erstreckungsrichtung und/oder in Erstreckungsrichtung der Hochsicken und Tiefsicken verlaufend hintereinander und/oder nebeneinander angeordnet sind. Die Anordnung mehrerer Bodenplatten hintereinander zur Ausgestaltung eines (Flächen-) Fundaments hat mehrere Vorteile. Zum einen können Tragschienen einer Tragstruktur zur Befestigung am Fundament an zugleich mehreren Bodenplatten befestigt werden, wenn die Länge der Tragschienen die Breite einer einzelnen Bodenplatte übersteigt. Somit können Tragschienen von fast beliebiger Länge mit dem (Flächen-)Fundament verbunden werden, wobei die Bodenplatten immer noch jeweils die zuvor genannten vorteilhaften (Einzel-)Ausmasse besitzen. Ein weiterer Vorteil besteht darin, dass die zu dem (Flächen-)Fundament angeordneten Bodenplatten zum Auffangen und Abführen von Regenwasser dienen können. Hierzu erlaubt auch das spezielle Querschnittsprofil der jeweiligen Bodenplatten eine rinnenartige und somit optimale Entwässerung. Wie zuvor beschrieben, wird auch eventuell unterhalb der Bodenplatten angesammeltes Wasser durch die Rillen gemäss dem Drainageprinzip abgeführt. Ein wesentlicher Vorteil besteht zudem darin, dass das aus den einzelnen Bodenplatten ausgebildete (Flächen-)Fundament insgesamt höhere Tragkräfte und Windlasten aufnehmen kann als im Vergleich hierzu einzelne Bodenplatten.

Vorzugsweise sind die Bodenplatten im Wesentlichen zueinander an den Seitenkanten fluchtend hintereinander und/oder nebeneinander angeordnet. Hierdurch gestaltet sich die Ausrichtung von der Tragstruktur oder von Elementen der Tragstruktur, beispielsweise die Tragschienen, insbesondere in Verbindung mit den zuvor genannten Masseinteilungen auf den Hochsicken der jeweiligen Bodenplatten, besonders einfach.

Vorzugsweise sind die Bodenplatten derart hintereinander angeordnet, dass eine Hochsicke einer Bodenplatte in eine Tiefsicke einer weiteren Bodenplatte greift. Hierdurch können hintereinander anzuordnende Bodenplatten schnell verlegt werden und eventuell zusätzlich miteinander verbunden werden, beispielsweise mittels Schrauben, Blindnieten, Klammern oder einer Klebeverbindung. Die Bodenplatten können hierbei derart verlegt werden, dass die jeweiligen Ober- und Unterseiten der Hochsicken und Tiefsicken der einzelnen Bodenplatten zueinander fluchten und vorteilhafterweise somit eine gemeinsame und durchgängige Ebene ausbilden. Hierzu sollte die Endkante der (Ansatz-)Tiefsicke einer bereits verlegten Bodenplatte ein Stück weit verkürzt (abgeschnitten) sein, wobei das Gleiche für die Anfangskante der (Ansatz-)Hochsicke einer zu verlegenden Bodenplatte gilt. Diese Endkanten sollten hierbei so zugeschnitten sein, dass diese derart an Unterflächenabschnitte der Hochsicke bzw. Tiefsicke der jeweils anderen Bodenplatte anschlagen, sodass wiederum die Unterseite der Tiefsicken und die Oberseite der Hochsicken beider Bodenplatten zueinander fluchten.

Vorzugsweise sind die Bodenplatten derart ineinander greifend angeordnet, dass Unterflächenabschnitte von jeweils der Hochsicke und der Tiefsicke hintereinander angeordneter Bodenplatten aneinander flächig anschlagen. Hierdurch können die Bodenplatten mittels Schrauben, Blindnieten oder Klammern gut miteinander verbunden werden. Besonders gut können sie mittels einer Klebeverbindung miteinander verbunden werden. Dadurch sind zueinander benachbarte Bodenplatten zudem sehr gut miteinander abgedichtet verbunden, wodurch abzuführendes Regenwasser ohne ein Eindringen in Bereiche unterhalb der Bodenplatten abgeführt werden kann.

Die zuvor genannte Aufgabe wird ebenfalls durch eine Tragstruktur zum Halten von Energieerzeugungsanlagen oder deren Teilen, die sich an einem Fundament nach einem der Ansprüche 1 bis 26 abstützt und an diesem befestigt ist, gelöst, wobei das Fundament wenigstens teilweise mit einer Substratschicht zum Stabilisieren der Tragstruktur beschwert ist. Durch das Beschweren des Fundaments mit der Substratschicht wird dem Fundament eine hohe Stabilität verliehen. Hierdurch können hohe Windlasten aufgenommen werden, ohne dass sich die Lage und Ausrichtung der gesamten Solaranlage verändert. Beispielsweise kann das Fundament direkt auf einer Oberflächenschicht des Flachdachs verlegt werden. Beispielsweise wird zuvor auf dem Flachdach eine Abdichtungsschicht, z.B. aus Bitumenmaterial-Schweissbahnen, verlegt und/oder eine Grundplatte gesetzt. Nach dem Verlegen des Fundaments auf der Oberflächenschicht des Flachdachs wird die Tragstruktur auf das Fundament verlegt und damit verbunden. Im Anschluss daran wird die Substratschicht auf das Fundament geschichtet, um dieses zu beschweren und somit die Tragstruktur zu stabilisieren.

Vorzugsweise umfasst die Substratschicht Erde, Steine, Kiesmaterial, Lava-Bims, Tonsplitter und/oder Humus. Somit kann die Substratschicht ein Material umfassen, welches ohnehin schon auf den meisten Flachdächern vorhanden ist. Aus unter anderem optischen Gründen sind viele Flachdächer bereits mit Kiesmaterial beschichtet. Dieses Kiesmaterial kann dann Abschnittsweise im Bereich der zu installierenden Solaranlage versetzt werden. Hinterher wird das Fundament auf der nunmehr freigelegten Oberfläche des Flachdachs verlegt und wird die Tragstruktur mit dem Fundament verbunden. Anschliessend wird das versetzte Kiesmaterial auf das Fundament geschichtet und somit zum Beschweren des Fundaments herangezogen. Dies hat den Vorteil, dass das Kiesmaterial, auf die Fläche betrachtet, ein hohes Gewicht zum zuverlässigen Stabilisieren der Tragstruktur hat. Ein weiterer Vorteil besteht darin, dass dieses Material gar nicht erst auf das Flachdach transportiert zu werden braucht, wodurch Zeit und Geld eingespart werden.

Vorzugsweise umfasst die Substratschicht Pflanzensamen. Hierdurch wird das mit dem Fundament bestückte Flachdach zu einem Gründach mit Solaranlagen verwandelt. Durch die zuvor genannte Unterteilung der Tiefsicken in einzelne Kammern wird die Substratschicht mit den darin enthaltenen Pflanzensamen gegen ein Ausspülen durch zum Beispiel heftige Regenschauer geschützt, da die Substratschicht zellenartig angeordnet und gehalten ist. Beispielsweise umfassen die Pflanzensamen Grassamen einer vorzugsweise robusten Grassorte.

Vorzugsweise weist die Substratschicht eine Dicke zwischen 10 und 15 cm, bevorzugt 12 cm, auf. Beispielsweise erzielt eine Aufschüttung mit Kiesmaterial einer Dicke von 12 cm eine Auflast von ca. 180 kg/m2. Diese Auflast ist ausreichend, um auch hohe Windbelastungen aufnehmen zu können. Somit kann die Solaranlage auf einem Flachdach mit beispielsweise beschränkter Tragkraft schnell und einfach installiert werden, wobei der Solaranlage eine hohe Stabilität verliehen wird.

Vorzugsweise weist die Tragstruktur zumindest eine Tragschiene auf, welche fest mit der Bodenplatte verbunden ist. Wie zuvor genannt, können mehrere Bodenplatten hintereinander verlegt werden, sodass die Tragschiene über mehrere Bodenplatten hinweg mit diesen verbunden werden kann.

Grundsätzlich kann die Tragschiene zwar unter jedem geeigneten Winkel zur Erstreckungsrichtung der Hochsicken und Tiefsicken angebracht werden. Vorzugsweise ist die Tragschiene quer, d.h. unter einem Winkel von ungefähr 90°, zur Erstreckungsrichtung der Hochsicken und Tiefsicken der Bodenplatte verlaufend fest mit der Bodenplatte verbunden. In einem bevorzugten Beispiel verläuft die Tragschiene senkrecht zur Erstreckungsrichtung der Hochsicken und Tiefsicken der Bodenplatte. In Verbindung mit dem Querschnittsprofil der Bodenplatte wird der Tragstruktur somit insgesamt eine hohe Stabilität verliehen.

Vorzugsweise ist die Tragschiene an der Oberseite der jeweiligen Hochsicken der Bodenplatte befestigt. Die zuvor genannte besonders vorteilhafte Ausgestaltung des Querschnittsprofils der Bodenplatte als Trapezprofil ermöglicht zusätzlich eine flächige Verbindung der Tragschiene an der (flächigen) Oberfläche eines jeweiligen Trapezes (Oberseite einer Hochsicke).

Vorzugsweise ist die Tragschiene mittels Blindnieten an den Oberseiten der jeweiligen Hochsicken der Bodenplatte befestigt. Diese Blindnieten können direkt von oben durch die Tragschiene und die Bodenplatte hindurch montiert werden. Vorteilhafterweise brauchen hierzu die zuvor auf dem Flachdach ausgelegten Bodenplatten nicht angehoben werden. Ein wesentlicher Vorteil besteht nämlich darin, dass sich die Blindnieten innerhalb des durch die Hochsicke ausgebildeten Zwischenraums aufspreizen können. Die aufgespreizten Elemente der Blindnieten gelangen dann mit Unterflächenabschnitten der Bodenplatte in Eingriff und bieten den notwendigen Halt. Die Zugfestigkeit einer Blindniete kann mehr als 100 kg betragen. Alternativ kann die Befestigung der Tragstruktur an der Oberseite der Bodenplatte mittels einer Schraubverbindung erfolgen.

Die zuvor genannte Aufgabe wird ebenfalls durch eine Solaranlage mit einer Tragstruktur nach einem der Ansprüche 27 bis 34 zum Halten wenigstens eines Solarpanels gelöst. Eine solche Solaranlage ist auf einer jeglichen Fläche, z.B. ein Flachdach, und besonders auch auf Flächen mit sensiblem Untergrund schnell und kostengünstig bei hoher Stabilität installierbar.

Die zuvor genannte Aufgabe wird ebenfalls durch eine Verwendung eines Fundaments nach einem der Ansprüche 1 bis 26 zum Halten von Tragstrukturen im Erdreich oder auf Gebäuden, insbesondere auf kiesbedeckten Flachdächern, gelöst. Bei der Installation auf einem Flachdach, welches bereits mit Kiesmaterial beschichtet ist, kann das Fundament der Solaranlage schnell und einfach durch das bereits vorhandene Kiesmaterial beschwert werden. Hierdurch kann das Fundament auch auf einem Flachdach mit begrenzter Tragkraft verwendet werden. Zudem entfallen Kosten zum Transport von Beschwerungsmaterialien.

Weitere Einzelheiten der Erfindung und insbesondere beispielhafte Ausführungsformen des erfindungsgemässen Fundaments für Tragstrukturen, der Tragstruktur, der Solaranlage mit Tragstruktur und der Verwendung des Fundaments werden im Folgenden anhand der beigefügten Zeichnungen erläutert. Es zeigen:
- Figur 1: ein Querschnittsprofil einer Bodenplatte eines Fundaments gemäss der Erfindung in einer beispielhaften Ausführungsform;
- Figur 2: eine Schnittansicht von zwei hintereinander verlegten Bodenplatten;
- Figur 3a: eine Draufsicht auf die Oberseite der Bodenplatte;
- Figur 3b: eine Perspektivansicht von der Oberseite der Bodenplatte;
- Figur 3c: eine Detailansicht eines in Figur 3b angezeigten Ausschnitts A1 der Oberseite von der Bodenplatte;
- Figur 4a: eine Draufsicht auf die Unterseite der Bodenplatte;
- Figur 4b: eine Perspektivansicht von der Unterseite der Bodenplatte;
- Figur 4c: eine Detailansicht eines in Figur 4b angezeigten Ausschnitts A2 der Unterseite von der Bodenplatte;
- Figur 5: eine teilweise ausgeschnittene Perspektivansicht von einer auf einem Flachdach installierten Solaranlage;
- Figur 6: eine teilweise ausgeschnittene Perspektivansicht von einer weiteren auf einem Flachdach installierten Solaranlage.

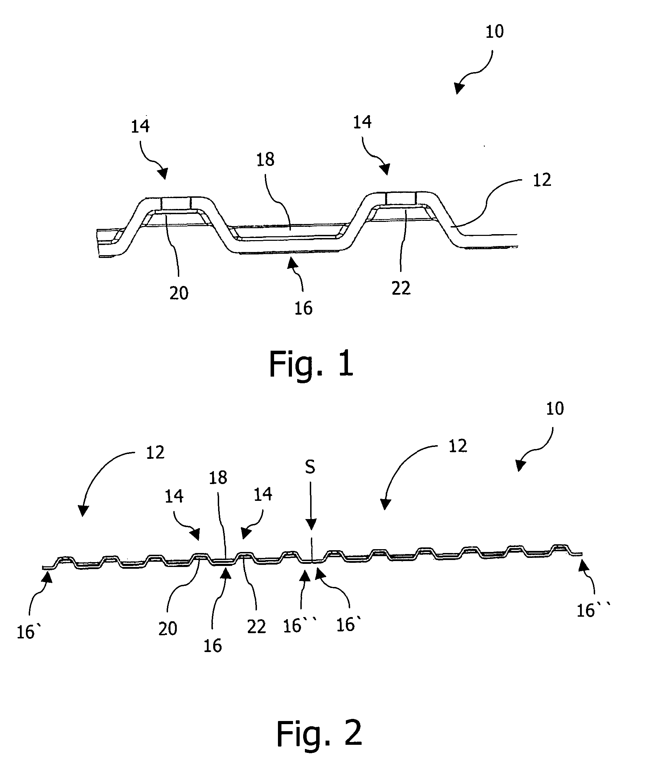

Figur 1 zeigt das Querschnittsprofil eines Fundaments 10 mit einer Bodenplatte 12. In diesem Beispiel ist das Querschnittsprofil als ein Trapezprofil ausgebildet. Die Bodenplatte 12 enthält Hochsicken 14 und Tiefsicken 16 in abwechselnder Anordnung. In diesem Beispiel ist die obere Grundseite von dem Trapez der Hochsicke 14 kürzer als die untere Grundseite von dem Trapez der Tiefsicke 16. Das Fundament 10 von der somit ausgebildeten Bodenplatte 12 besitzt eine in Relation zum Materialeinsatz sehr hohe Formstabilität. Durch diese Effizienz ist die Bodenplatte 12 sehr günstig herstellbar. Die Bodenplatte 12 ist aus einem recyclierten Kunststoffmaterial hergestellt, welches einen Polyethylen-Kunststoff umfasst. Somit sind die Materialkosten aufgrund des gut formbaren und verarbeitbaren Materials sehr gering.

Zur weiteren Erhöhung der Formstabilität und zum Einbringen einer Verwindungssteifigkeit der Bodenplatte 12 sind Versteifungsrippen 18 in der Tiefsicke 16 angeordnet. Hierdurch wird insbesondere die Formstabilität der jeweiligen Tiefsicken 16 in Relation zu den benachbarten Hochsicken 14 erhöht. Ferner sind auch innerhalb der Hochsicken 14 jeweilige Verstärkungsrippen 20, 22 zur Erhöhung der Formstabilität und zum Einbringen einer Verwindungssteifigkeit der Bodenplatte 12 angeordnet. Die Verstärkungsrippen 18, 20, 22 können hierbei einstückig mit der Bodenplatte 12 ausgebildet sein. Vorteilhafterweise sind sie senkrecht zur Erstreckungsrichtung der Hochsicken 14 und Tiefsicken 16 verlaufend ausgebildet. Die Versteifungsrippen 18, 20, 22 tragen bei minimalem Materialeinsatz zu einer wesentlichen Erhöhung der Formstabilität und Verwindungssteifigkeit bei. Der Verlauf der Versteifungsrippen 18 zu den Versteifungsrippen 20, 22 kann abwechselnd versetzt sein. Alternativ können die Versteifungsrippen 18, 20, 22 zueinander gradlinig verlaufen.

Figur 2 zeigt eine Schnittansicht eines Fundaments 10 mit zwei Bodenplatten 12, welche senkrecht in Erstreckungsrichtung der Hochsicken 14 und Tiefsicken 16 verlaufend hintereinander angeordnet sind. Durch diese Anordnung verlaufen die Hochsicken und Tiefsicken 14, 16 der beiden Bodenplatten 12 zueinander parallel. Die beiden Bodenplatten 12 enthalten jeweils die Versteifungsrippen 18, 20, 22 zur Erhöhung der Formstabilität und Verwindungssteifigkeit. In dem in der Figur angezeigten Beispiel enden die beiden Bodenplatten 12 an ihrer Breitenseite jeweils mit einer Tiefsicke 16', 16", deren Länge (in Figurenebene betrachtet) jeweils gleich der halben Länge der weiteren Tiefsicken 16 entspricht. Somit haben die an der Stossstelle S der beiden Bodenplatten 12 angeordneten Tiefsicken 16', 16" insgesamt eine Länge, welche gleich der Länge der weiteren Tiefsicken 16 entspricht. Somit haben sämtliche Hoch- und Tiefsicken 14, 16 der Bodenplatten 12 zueinander identische Längen und sind somit zueinander identisch beabstandet. Hierdurch wird ein Fundament mit einheitlicher Oberfläche geschaffen, auf welcher sich Elemente der Tragstruktur schnell und einfach ausrichten lassen.

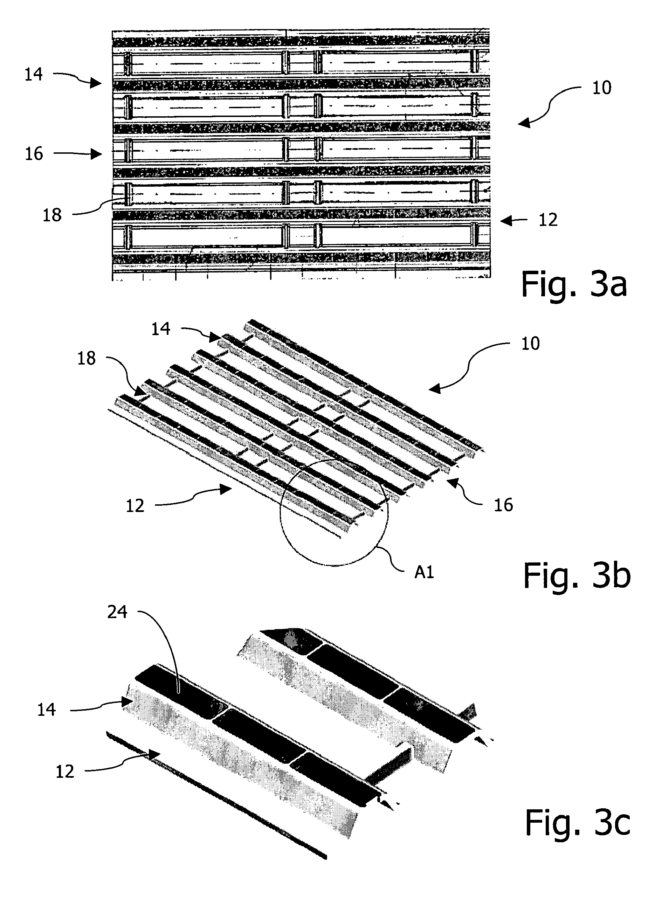

Figuren 3a, b, c zeigen jeweils die Oberseite der Bodenplatte 12 des Fundaments 10 in unterschiedlichen Ansichten. Zwischen benachbarten Hochsicken 14 sind jeweils die Versteifungsrippen 18 ausgebildet, welche senkrecht zur Erstreckungsrichtung der jeweiligen Hochsicken 14 verlaufen. Die Versteifungsrippen 18 erhöhen die Formstabilität der Bodenplatte 12 und sind ebenfalls zur Unterteilung der Tiefsicken 16 in einzelne wannenförmige Kammern bzw. Sektionen oder Zellen ausgelegt. Diese Kammern erhöhen den Halt und die Festigkeit einer optional auf der Bodenplatte 12 beschichteten Substratschicht (nicht gezeigt). Beispielsweise verhindern die Kammern ein Auswaschen bzw. Unterspülen der Substratschicht.

Auf der Oberseite einer jeweiligen Hochsicke 14 sind Masseinteilungen 24 angebracht, wie detailliert in Figur 3c angezeigt, mithilfe derer die Arbeit zum Positionieren und Verlegen einer Tragstruktur (nicht gezeigt) auf der Bodenplatte 12 erleichtert und verkürzt wird. Mithilfe dieser Masseinteilungen 24 können Tragschienen der Tragstruktur ohne Zuhilfenahme von Längen- und Winkelmassen, beispielsweise ein Zollstock, Winkel, usw., oder Distanzlehren ausgerichtet werden. Die Masseinteilungen 24 können kastenförmige Aus- oder Einprägungen vorbestimmter Länge sein. Die Masseinteilungen können eine Länge im Bereich zwischen 5 und 15 cm haben.

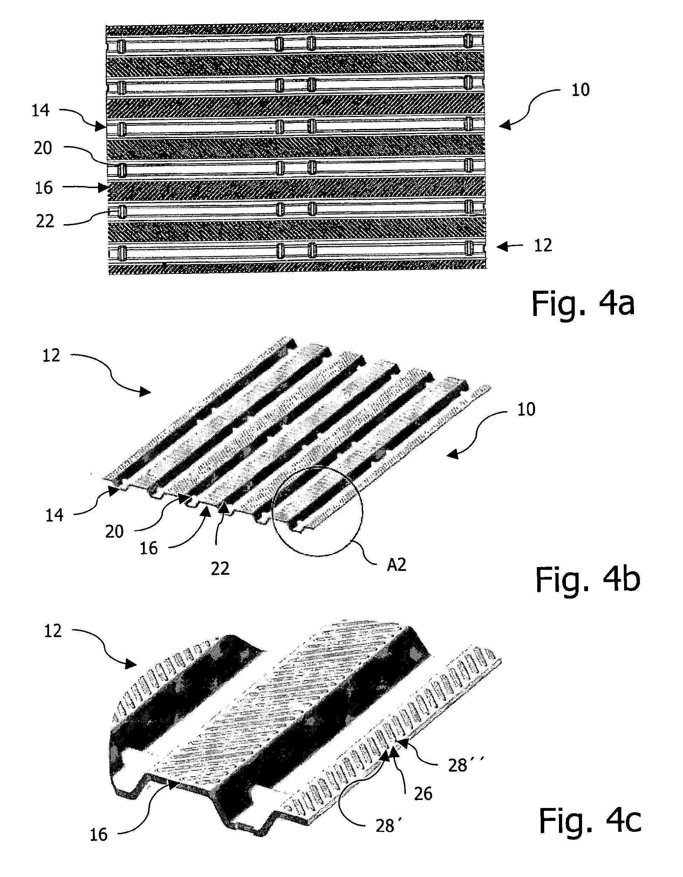

Figuren 4a, b, c zeigen jeweils die Unterseite der Bodenplatte 12 des Fundaments 10 in unterschiedlichen Ansichten. In diesen Ansichten sind die Versteifungsrippen 20, 22 zwischen benachbarten Tiefsicken 16 besonders gut zu erkennen.

Auf den Unterseiten der Tiefsicken 16 sind ferner Rillen 26 angeordnet, welche jeweils zueinander parallel ausgerichtet sind. Hierbei erstrecken sich die Rillen 26 quer zur Erstreckungsrichtung der Tiefsicken 16. Bei dem in den Figuren angezeigten Beispiel verlaufen die Rillen 26 bei einem Winkel von 45° zur Erstreckungsrichtung der Tiefsicken 16. Diese Rillen 26 dienen zum Abführen von unterhalb der Bodenplatte 12 angestautem Wasser gemäss dem Drainageprinzip.

Im Falle eines Regenschauers kann ein Wasserstrom in dem Abschnitt der Bodenplatte 12 zwischen jeweils benachbarten Tiefsicken 16 fliessen. Die Strömungsrichtung dieses Wasserstroms kann beispielsweise durch ein Gefälle des Flachdaches definiert sein. Dieser Wasserstrom wird eine Sogwirkung an jenen Eingängen der Rillen 26 hervorrufen, welche zur Richtung des Wasserstroms hin ausgerichtet sind. Wie besonders gut in Figur 4c zu erkennen, sind die Ausrichtungen der Rillen 26 (von links nach rechts betrachtet), von Tiefsicke zu Tiefsicke abwechselnd, aufwärts und abwärts gerichtet. Hierdurch besteht der Vorteil, dass die Wasserabfuhr gemäss dem Drainageprinzip unabhängig von der Strömungsrichtung des Wasserstroms bzw. vom Gefälle des Flachdaches gewährleistet ist. Somit können die Bodenplatten 12 unabhängig von der möglichen Strömungsrichtung des Wasserstroms bzw. vom Gefälle des Flachdachs verlegt werden, da das Drainageprinzip in beiden Strömungsrichtungen Anwendung findet. Wie besonders deutlich in Figur 4c zu erkennen, können die Rillen 26 zwischen benachbarten Rillenvorsprüngen 28', 28" ausgebildet sein. Diese Rillenvorsprünge 28', 28" sind ebenfalls einstückig mit dem Material der Bodenplatte 12 ausgebildet. Alternativ können die Rillen 26 als Ausnehmungen in das Material der Bodenplatte 12 eingelassen sein.

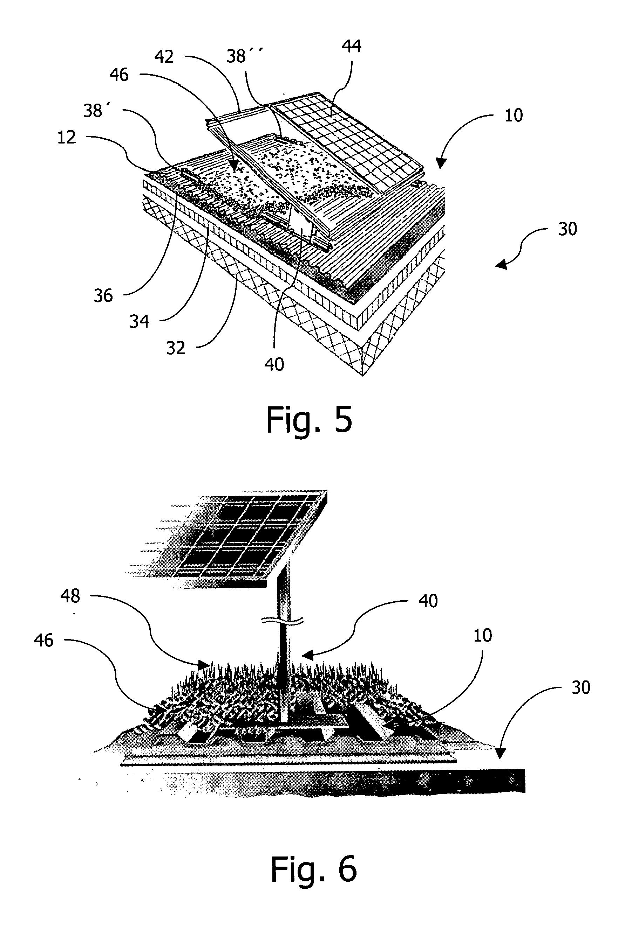

Figur 5 zeigt eine Teilschnittansicht eines Flachdachs 30 mit einer darauf installierten Solaranlage. Das Flachdach 30 enthält, in der Reihenfolge von unten nach oben, eine Dachunterkonstruktion 32, eine darauf befindliche thermische Dachisolation 34 und eine darauf verlegte Dachfolie 36, welche wasserabdichtend und wurzelfest ausgestaltet ist. Die Solaranlage ist auf dem Fundament 10 befestigt, welches eine Bodenplatte 12 oder eine Mehrzahl miteinander verbundener Bodenplatten umfasst. Auf der Oberseite des Fundaments 10 sind Tragschienen 38', 38" befestigt. Diese Tragschienen 38', 38" sind dabei derart befestigt, dass ihre jeweiligen Längsrichtungen senkrecht zur Erstreckungsrichtung der Hoch- und Tiefsicken 14, 16 der Bodenplatte 12 des Fundaments 10 verlaufen.

Die Tragschienen 38', 38" sind Elemente einer Tragstruktur 40 zum Tragen und Ausrichten eines Solarpanelrahmens 42, in welchem ein oder mehrere Solarpanels 44 aufgenommen sind. Das Fundament 10 ist mit einer Substratschicht 46 zum Stabilisieren der Tragstruktur 40 und somit der gesamten Solaranlage beschwert. Somit verbleibt die Solaranlage auch bei Wind mit hoher Geschwindigkeit unverändert an ihrer Position. In diesem Beispiel umfasst die Substratschicht 46 ein Kiesmaterial, welches beispielsweise schon vor der Installation der Solaranlage auf dem Flachdach 30 vorhanden war. Somit wird die Solaranlage auch bei hohen Windgeschwindigkeiten nahezu unverrückbar mit dem Flachdach 30 gekoppelt, ohne dass Verankerungselemente durch die Dachfolie 36, thermische Dachisolation 34 und Dachunterkonstruktion 32 hindurch verlaufen müssen und dadurch Beschädigungen verursachen.

Figur 6 zeigt ebenfalls eine auf einem Flachdach 30 installierte Solaranlage, deren Tragstruktur 40 mit dem Fundament 10 befestigt ist, welches auf dem Flachdach 30 verlegt ist. Wie schematisch in der Figur zu erkennen, ist das Fundament 10 mit einer Substratschicht 46 beschwert, welche auch in diesem Beispiel ein Kiesmaterial umfassen kann. Das Kiesmaterial kann beispielsweise bis zu einer Höhe zwischen 10 und 15 cm oberhalb des Fundaments 10 beschichtet werden. Die Substratschicht 46 enthält ebenfalls einen Grünwuchs 48 zur Begrünung des Flachdachs 30. Hierbei können die notwendigen Pflanzensamen bereits in der Substratschicht 46 enthalten sein, welche bei der Installation von der Solaranlage auf das Fundament 10 beschichtet wird. Der Grünwuchs 48 kann beispielsweise ein Rasen einer strapazierfähigen Rasensorte sein.

## Patentansprüche

1. Fundament (10) für Tragstrukturen (40) von Anlagen oder Ähnlichem, umfassend eine Bodenplatte (12) aus einem Kunststoffmaterial, mit einem wellenförmig gestalteten Querschnittsprofil, das abwechselnde Hochsicken (14) und Tiefsicken (16) aufweist.

2. Fundament (10) nach Anspruch 1, wobei das Kunststoffmaterial ein Rezyklat ist und vorzugsweise einen PE-(Polyethylen)-Kunststoff umfasst.

3. Fundament (10) nach Anspruch 1 oder 2, wobei das Gewicht der Bodenplatte (12) zwischen 5 und 10 kg/m2, bevorzugt 8 kg/m2, beträgt.

4. Fundament (10) nach einem der vorhergehenden Ansprüche, wobei das wellenförmige Querschnittsprofil als ein Trapezprofil ausgebildet ist.

5. Fundament (10) nach Anspruch 4, wobei das Trapezprofil zwischen drei und acht, bevorzugt sechs Hochsicken (14) aufweist.

6. Fundament (10) nach einem der vorhergehenden Ansprüche, wobei eine Masseinteilung (24) auf der Oberseite der Bodenplatte (12) vorgesehen ist.

7. Fundament (10) nach Anspruch 6, wobei die Masseinteilung (24) auf den Hochsicken (14) angebracht ist.

8. Fundament (10) nach Anspruch 6 oder 7, wobei die Masseinteilung (24) kastenförmige Aus- oder Einprägungen vorbestimmter Länge aufweist.

9. Fundament (10) nach Anspruch 8, wobei die Aus- oder Einprägungen eine Länge zwischen 5 und 15 cm, bevorzugt 10 cm, haben.

10. Fundament (10) nach einem der vorhergehenden Ansprüche, wobei die Bodenplatte (12) eine Mehrzahl von Versteifungsrippen (18, 20, 22) enthält, welche quer zur Erstreckungsrichtung der Hochsicken (14) und Tiefsicken (16) an der Bodenplatte (12) verlaufen.

11. Fundament (10) nach Anspruch 10, wobei die Versteifungsrippen (18, 20, 22) senkrecht zur Erstreckungsrichtung der Hochsicken (14) und Tiefsicken (16) der Bodenplatte (12) verlaufen.

12. Fundament (10) nach Anspruch 10 oder 11, wobei die Versteifungsrippen (18, 20, 22) zur Unterteilung wenigstens der Tiefsicken (16) in einzelne wannenförmige Kammern ausgelegt sind.

13. Fundament (10) nach einem der Ansprüche 10 bis 12, wobei zumindest zwei Versteifungsrippen (18, 20, 22) symmetrisch zur Mittenlinie der Bodenplatte (12) angeordnet sind.

14. Fundament (10) nach Anspruch 13, wobei die Versteifungsrippen (18, 20, 22) derart angeordnet sind, dass bei einer Vereinzelung der Bodenplatte (12) in zumindest zwei Bodenplatten-Elemente identischen Abmasses an diesen jeweiligen Bodenplatten-Elementen weiterhin zumindest zwei Versteifungsrippen jeweils symmetrisch zur jeweiligen Mittenlinie der Bodenplatten-Elemente angeordnet sind.

15. Fundament (10) nach Anspruch 14, bei welchem an der Bodenplatte eine Mehrzahl von Elemente-Masseinteilungen zur Vereinzelung der Bodenplatte in zumindest zwei Bodenplatten-Elemente identischen Abmasses angebracht sind.

16. Fundament (10) nach einem der Ansprüche 13 bis 15, bei welchem die Bodenplatte vier symmetrische Versteifungsrippen (18, 20, 22) enthält, welche derart angeordnet sind, dass nach einer Halbierung der Bodenplatte in zwei Bodenplatten-Elemente, die jeweiligen Abstände zwischen einer Versteifungsrippe zur jeweiligen Seitenkante identisch sind.

17. Fundament (10) nach einem der vorhergehenden Ansprüche, wobei die Bodenplatte (12) eine Mehrzahl von Rillen (26) enthält, welche an der Unterseite der Bodenplatte (12) und quer zur Erstreckungsrichtung der Tiefsicken (16) verlaufen.

18. Fundament nach Anspruch 17, wobei die Rillen (26) bei einem Winkel von 45° zur Erstreckungsrichtung der Tiefsicken (16) verlaufen.

19. Fundament nach Anspruch 17 oder 18, wobei die Rillen (26) zwischen benachbarten Tiefsicken (16) in Relation zueinander um 90° versetzt verlaufen.

20. Fundament (10) nach einem der vorhergehenden Ansprüche, wobei die Bodenplatte (12) eine Breite zwischen 60 und 100 cm, bevorzugt 80 cm, und eine Länge zwischen 100 und 140 cm, bevorzugt 120 cm, aufweist, wobei die Breite senkrecht zur Erstreckungsrichtung und die Länge in Erstreckungsrichtung der Hochsicken (14) und Tiefsicken (16) definiert sind.

21. Fundament (10) nach einem der vorhergehenden Ansprüche, wobei die Bodenplatte (12) eine Materialstärke zwischen 5 und 10 mm, bevorzugt 8 mm, aufweist.

22. Fundament (10) nach einem der vorhergehenden Ansprüche, wobei die Bodenplatte (12) zwischen der Unterseite der Tiefsicke (16) und der Oberseite der Hochsicke (14) eine Tiefe zwischen 30 und 40 mm, bevorzugt 35 mm, aufweist.

23. Fundament (10) nach einem der vorhergehenden Ansprüche, bestehend aus zumindest zwei Bodenplatten (12), welche senkrecht zur Erstreckungsrichtung und/oder in Erstreckungsrichtung der Hochsicken (14) und Tiefsicken (16) verlaufend hintereinander und/oder nebeneinander angeordnet sind.

24. Fundament (10) nach Anspruch 23, wobei die Bodenplatten (12) im Wesentlichen zueinander an den Seitenkanten fluchtend hintereinander und/oder nebeneinander angeordnet sind.

25. Fundament (10) nach Anspruch 23 oder 24, wobei die Bodenplatten (12) derart hintereinander angeordnet sind, dass eine Hochsicke (14) einer Bodenplatte (12) in eine Tiefsicke (16) einer weiteren Bodenplatte (12) greift.

26. Fundament (10) nach Anspruch 25, wobei die Bodenplatten (12) derart ineinander greifend angeordnet sind, dass Unterflächenabschnitte von jeweils der Hochsicke (14) und der Tiefsicke (16) hintereinander angeordneter Bodenplatten (12) aneinander flächig anschlagen.

27. Tragstruktur (40) zum Halten von Energieerzeugungsanlagen oder deren Teilen, die sich an einem Fundament (10) nach einem der Ansprüche 1 bis 26 abstützt und an diesem befestigt ist, wobei das Fundament (10) wenigstens teilweise mit einer Substratschicht (46) zum Stabilisieren der Tragstruktur (40) beschwert ist.

28. Tragstruktur (40) nach Anspruch 27, wobei die Substratschicht (46) Erde, Steine, Kiesmaterial, Lava-Bims, Tonsplitter und/oder Humus umfasst.

29. Tragstruktur (40) nach Anspruch 27 oder 28, wobei die Substratschicht (46) Pflanzensamen umfasst.

30. Tragstruktur (40) nach einem der Ansprüche 27 bis 29, wobei die Substratschicht (46) eine Dicke zwischen 10 und 15 cm, bevorzugt 12 cm, aufweist.

31. Tragstruktur (40) nach einem der Ansprüche 27 bis 30, welche zumindest eine Tragschiene (38', 38") aufweist, welche fest mit der Bodenplatte (12) verbunden ist.

32. Tragstruktur (40) nach Ansprüche 31, wobei die Tragschiene (38', 38") quer zur Erstreckungsrichtung der Hochsicken (14) und Tiefsicken (16) der Bodenplatte (12) verlaufend fest mit der Bodenplatte (12) verbunden ist.

33. Tragstruktur (40) nach Anspruch 31 oder 32, wobei die Tragschiene (38', 38") an der Oberseite der jeweiligen Hochsicken (14) der Bodenplatte (12) befestigt ist.

34. Tragstruktur (40) nach Anspruch 33, wobei die Tragschiene (38', 38") mittels Blindnieten an den Oberseiten der jeweiligen Hochsicken (14) der Bodenplatte (12) befestigt ist.

35. Solaranlage mit einer Tragstruktur (40) nach einem der Ansprüche 27 bis 34 zum Halten wenigstens eines Solarpanels (44).

36. Verwendung eines Fundaments (10) nach einem der Ansprüche 1 bis 26 zum Halten von Tragstrukturen (40) im Erdreich oder auf Gebäuden, insbesondere auf kiesbedeckten Flachdächern (30).
